# EUROPEAN PATENT APPLICATION

(11) **EP 2 873 804 A1**
(43) Date of publication of application: **20.05.2015**
(21) Application number: 14191520.7
(22) Date of filing: 03.11.2014
(51) Int. Cl.: F01D 1/02, F01D 17/10, F02C 9/18, F01D 17/14

(54) **Steam turbine equipment**

(30) Priority: 05.11.2013 JP 2013229512
(71) Applicant: Mitsubishi Hitachi Power Systems, Ltd., Yokohama 220-8401 (JP)
(72) Inventor: Takahashi, Yusuke, Yokohama,, Kanagawa 220-8401 (JP); Lee, Goingwon, Yokohama,, Kanagawa 220-8401 (JP); Ogata, Koji, Yokohama,, Kanagawa 220-8401 (JP); Ogasawara, Nozomu, Yokohama,, Kanagawa 220-8401 (JP)
(74) Representative: MERH-IP Matias Erny Reichl Hoffmann

(57) **Abstract**

Steam turbine equipment is provided that can sharply adjust power generation output based on a variation in power demand while improving power generation efficiency during operation at a rated power generation output.

The steam turbine equipment includes a steam control valve 4 disposed in a main steam pipe 2 leading from a boiler 1 to a steam turbine, an overload valve 6 disposed in an overload steam pipe 5 that bypasses the steam control valve 4 and leads from the main steam pipe 2 to a lower-pressure side of a steam turbine than a point where the main steam pipe 2 connects to the steam turbine, and a slit portion 31 through which the steam having flowed through the overload steam pipe 5 passes before flowing into a steam turbine stage portion. The slit portion 31 is configured such that its width C in an axial direction of a turbine rotor 15 is smaller than an inside diameter d of the overload steam pipe 5 (d > C).

## Description

### BACKGROUND OF THE INVENTION

### 1. Field of the Invention

The present invention relates to steam turbine equipment.

### 2. Description of the Related Art

JP-2006-161698-A describes the following technology as an overload operation device for a steam turbine, the device being capable of increasing the output power of the steam turbine while controlling the pressure of main steam. This steam turbine includes a steam turbine high-pressure portion and a steam turbine reheat portion. High pressure steam is introduced into the steam turbine high pressure portion via a main steam control valve and reheat steam is introduced into the steam turbine reheat portion via a reheat steam valve. A pipe is made to branch off from the inlet side of the main steam control valve and thus provides communication, via an overload valve, between the inlet side of the main steam control valve and the inlet side of the steam turbine reheat portion.

### SUMMARY OF THE INVENTION

A thermal power plant having a steam turbine is occasionally required to adjust the power generation output from a rated value according to an expected variation in power demand.

A method such as throttle governing, nozzle governing, and sliding pressure operation has heretofore been used as a technique for regulating power generation output of a thermal power plant.

Throttle governing is a method in which power generation output is adjusted by controlling the opening of a steam control valve to reduce steam and thereby changing a heat drop and a flow rate of steam.

In this method, however, the steam control valve is fully opened only during the operation at the maximum power generation output. In the operating states other than that at the maximum power generation output, the power generation efficiency decreases due to a valve throttle loss. In general, a rated power generation output is lower than the maximum power generation output. Therefore, a valve throttle loss occurs during the operation at the rated power generation output, thereby decreasing the power generation efficiency below that during the operation at the maximum power generation output.

Nozzle governing is a method in which power generation output is adjusted by changing the number of steam control valves to change the number of nozzles jet steam with an effective head drop remaining constant and thereby controlling the flow rate of steam.

This method, however, requires a control stage to be installed inside a steam turbine, the control stage having a mechanism which delivers air from only part of a group of nozzles to a turbine. In general, the installation of the control stage causes a decline in power generation efficiency.

Sliding pressure operation is a method in which a steam turbine is operated at a steam pressure corresponding to a required power generation output.

This method neither causes a throttle loss of a steam control valve nor requires a control stage to be installed, thereby improving power generation efficiency. However, it is difficult to sharply adjust power generation output with this method because the steam generation source of a thermal power plant cannot rapidly change steam pressure.

The technology described in JP-2006-161698-A has a problem that the steam that passes through the overload valve and flows into the steam turbine is unlikely to diffuse in the circumferential direction of the turbine, which makes it hard to suppress a drift at a stage portion.

The present invention has been made in view of the above situations and aims to provide steam turbine equipment that can sharply adjust power generation output based on a variation in power demand while improving power generation efficiency during operation at a rated power generation output.

To solve the above problems, the present invention employs a configuration described in the claims, for example.

According to one of the aspects of the present invention, there is provided steam turbine equipment that includes: a main steam pipe for leading steam generated in a steam generating source to a steam turbine; a main steam control valve disposed in the main steam pipe; an overload steam pipe that branches from the main steam pipe and bypasses the steam control valve such that the steam generated in the steam generating source is led to a lower-pressure side of the steam turbine than a point where the main steam pipe connects to the steam turbine; an overload valve disposed in the overload steam pipe; and a slit portion through which the steam that has passed through the overload valve passes before flowing into a steam turbine stage portion, wherein the slit portion is configured such that its width in an axial direction of a turbine rotor 15 is smaller than an inside diameter of the overload steam pipe.

The present invention provides steam turbine equipment that can sharply adjust power generation output based on a variation in power demand while improving power generation efficiency during the operation at a rated power generation output.

### BRIEF DESCRIPTION OF THE DRAWINGS

FIG. 1 is a schematic diagram illustrating the entire configuration of steam turbine equipment according to an embodiment of the present invention.
FIG. 2 is a cross-sectional view illustrating an example of a configuration of a high pressure turbine according to a first embodiment of the present invention.
FIG. 3 illustrates rotating blades and stationary blades located at a stage portion of the high pressure turbine according to the first embodiment of the present invention, as viewed from the outside in a turbine-radial direction.
FIG. 4 is a cross-sectional view illustrating an example of a configuration of a high pressure turbine according to a second embodiment of the present invention.

### DESCRIPTION OF THE PREFERRED EMBODIMENTS

Preferred embodiments of steam turbine equipment of the present invention will be described below with reference to the figures.

### <First Embodiment>

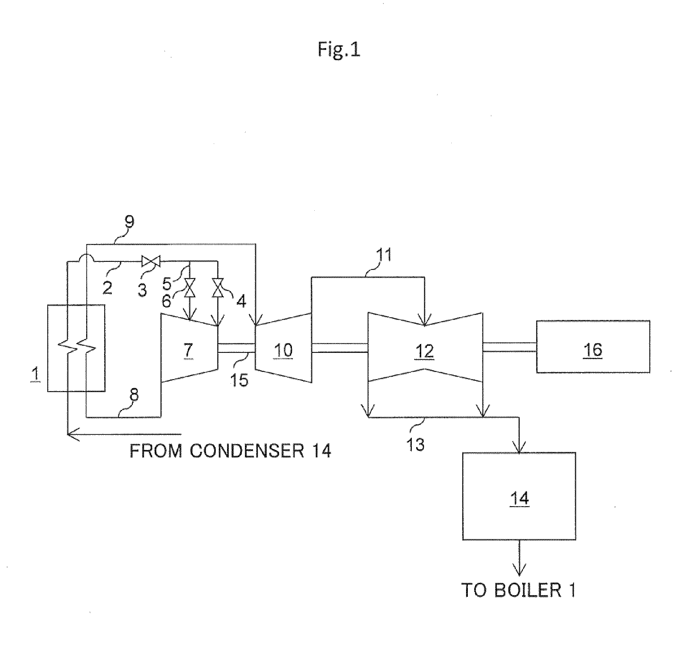

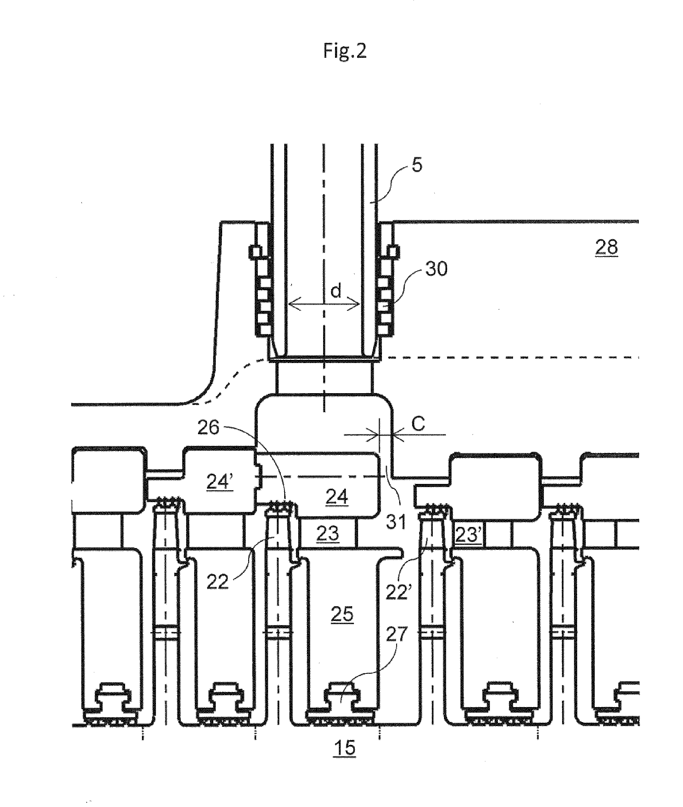

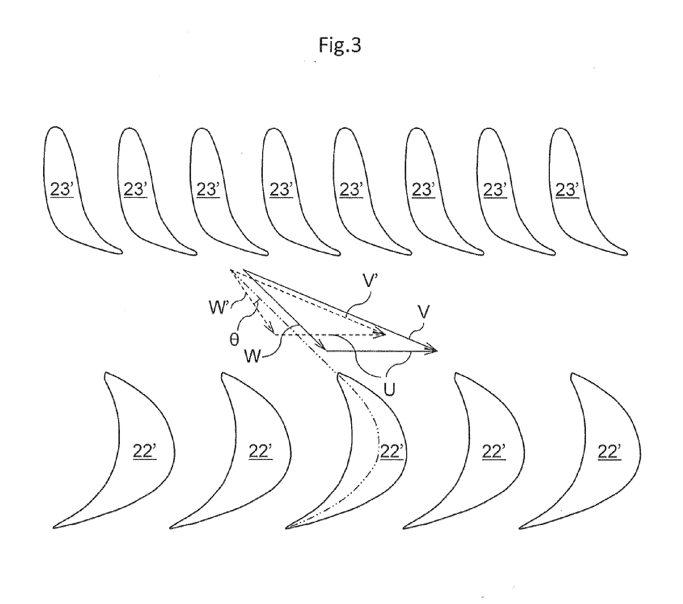

A first embodiment of steam turbine equipment of the present invention will be described below with reference to FIGS. 1 to 3. FIG. 1 is a schematic diagram illustrating the entire configuration of steam turbine equipment (a thermal power plant) according to an embodiment of the present invention. FIG. 2 is a cross-sectional view illustrating an example of a configuration of a high pressure turbine according to a first embodiment of the present invention. FIG. 3 illustrates rotating blades and stationary blades located at a stage portion of the high pressure turbine according to the first embodiment of the present invention, as viewed from the outside in a radial direction of the turbine.

As illustrated in FIG. 1, the steam turbine equipment of the present embodiment includes a high pressure turbine 7, an intermediate pressure turbine 10, a low pressure turbine 12, a condenser 14, and a generator 16.

A boiler 1 is a fossil fuel boiler as one example of a steam generating source. The boiler 1 burns fossil fuel to heat steam condensate fed from the condenser 14, thereby generating high pressure and temperature steam.

A main steam pipe 2 is provided with a main steam stop valve 3 and a main steam control valve 4. An overload steam pipe 5 is connected to the main steam pipe 2. The overload steam pipe 5 bypasses the main steam control valve 4 and connects to a lower-pressure side of the steam turbine than a point where the main steam pipe 2 connects to the steam turbine. An overload valve 6 is disposed in the overload steam pipe 5.

Steam generated in the boiler 1 is led to the high pressure turbine 7 via the main steam pipe 2 and the overload steam pipe 5 to drive the high pressure turbine 7. The steam which has driven the high pressure turbine 7 and decreased in pressure flows down a high pressure turbine exhaust pipe 8 into the boiler 1, where the steam is reheated into reheat steam.

The reheat steam reheated in the boiler 1 is led through a hot reheat pipe 9 to the intermediate pressure turbine 10 and drives the intermediate pressure turbine 10.

The steam that has driven the intermediate pressure turbine 10 and decreased in pressure is led through an intermediate pressure exhaust pipe 11 to the low pressure turbine 12 and drives the low pressure turbine 12.

The steam that has driven the low pressure turbine 12 and decreased in pressure is led through a low pressure turbine exhaust pipe 11 to the condenser 14. The condenser 14, which is provided with a cooling water pipe (not shown), condenses the steam into water by exchanging heat between the steam led into the condenser 14 and cooling water flowing through the cooling water pipe. The water condensed in the condenser 14 is fed to the boiler 1 again.

The high pressure turbine 7, the intermediate pressure turbine 10, and the low pressure turbine 12 illustrated in FIG. 1 are coaxially coupled to one another by a turbine rotor 15. The generator 16 is connected to the turbine rotor 15. The generator 16 is driven by the rotary power of the high pressure turbine 7, the intermediate pressure turbine 10 and the low pressure turbine 12. Thus, the output power of the high pressure turbine 7, the intermediate pressure turbine 10, and the low pressure turbine 12 is taken out as electric power (electric energy).

A main feature of the steam turbine equipment according to the present embodiment is to have a slit portion 31 through which the steam having flowed through the overload steam pipe 5 passes before flowing into the steam turbine stage portion. The slit portion 31 is configured to have a width smaller than the inside diameter of the overload steam pipe 5. The slit portion 31 here in the present invention refers to a narrow gap through which steam passes.

As illustrated in FIG. 2, a diaphragm outer ring 24, a diaphragm inner ring 25, fins 26, a packing 27, a casing 28 holding the diaphragm outer ring 24, a seal ring 30, a slit portion 31, etc. are disposed in the vicinity of a steam inlet through which the steam from the overload steam pipe 5 flows into the high pressure turbine 7.

The high pressure turbine 7 includes the turbine rotor 15 and rotating blades 22 mounted on the turbine rotor 15.

The diaphragm of the high pressure turbine 7 includes the diaphragm outer ring 24, the diaphragm inner ring 25, and a stationary blade 23 located between the diaphragm inner ring 25 and the diaphragm outer ring 24. The stationary blade 23 and the rotating blade 22 constitute a stage of the steam turbine.

The diaphragm outer ring 24 is secured to the casing 28 or to a diaphragm outer ring 24' of another adjacent stage. Incidentally, the diaphragm outer ring 24 is provided with the fins 26 that form a seal between the diaphragm outer ring 24 and the tip of the rotating blade 22 to prevent steam leakage.

The diaphragm inner ring 25 is provided with the packing 27 that forms a seal between the diaphragm inner ring 25 and the rotor 15 to prevent steam leakage.

The overload steam pipe 5 is inserted into and fitted to the casing 28 with the seal rings 30. The outer surface of the overload steam pipe 5 contacts with the seal rings 30, thereby preventing steam from leaking through the gap between the overload steam pipe 5 and the casing 28.

The slit portion 31 is a turbine-axial gap formed between the diaphragm outer ring 24 and the casing 28. As described above, the slit portion 31 is a narrow gap through which steam passes. The diaphragm outer ring 24 and the casing 28 are arranged so that a width C of the slit portion 31 in the axial direction of the turbine rotor 15 is smaller than an inside diameter d of the overload steam pipe 5 (d > C).

As described above, the steam turbine equipment according to the first embodiment of the present invention includes: the main steam control valve 4 disposed in the main steam pipe 2 leading from the boiler 1 to the steam turbine; the overload valve 6 disposed in the overload steam pipe 5 that bypasses the main steam control valve 4 and leads from the main steam pipe to the lower-pressure side of the steam turbine than a point where the main steam pipe 2 connects to the steam turbine; and the slit portion 31 through which the steam having flowed through the overload steam pipe 5 passes before flowing into the steam turbine stage portion. The slit portion 31 is configured such that its width C in the axial direction of the turbine rotor 15 is smaller than the inside diameter d of the overload steam pipe 5 (d > C).

The steam turbine equipment according to the embodiment of the present invention configured as described above achieves the following operational advantages as described below. A description is given below of such operational advantages.
(1) An improvement in power generation efficiency during rated power generation output operation
   When the turbine is required to operate at a rated power generation output, the main steam control valve 4 is fully opened and the overload valve 6 is fully closed. This can eliminate a throttle loss at the main steam control valve 4, thereby improving power generation efficiency.
(2) Measures for a power generation output exceeding a rated value
   When the turbine is required to operate at a power generation output exceeding a rated value, the main steam control valve 4 is fully opened and the overload valve 6 is opened in accordance with the required power generation output. This can easily achieve the power generation output exceeding the rated value.
(3) Sharp adjustment of power generation output
   The power generation output can be sharply adjusted by use of the steam control valve 4 and the overload valve 6.
(4) Suppression of drift at the stage portion
   The present embodiment is configured such that the width C of the slit portion 31 in the axial direction of the turbine rotor 5 is smaller than the inside diameter d of the overload steam pipe 5. The steam that has passed through the overload valve 6 and flowed into the steam turbine is decelerated before passing through the slit portion 31. Therefore, the steam can be diffused easily in the circumferential direction of the turbine after flowing into the steam turbine, thereby suppressing the drift at the stage portion.
(5) Suppression of non-uniformity in temperature
   In general, the steam that has just flowed into the steam turbine from the overload valve 6 is higher in temperature than the steam at the stage portion that has passed through the slit portion 31. Therefore, temperature increases at the stage portion, thereby reducing the material strength at the stage portion. This phenomenon becomes conspicuous especially when an intensive local increase in temperature occurs due to a large drift at the stage portion.
   In contrast, the present embodiment can suppress the drift at the stage portion as described in item (4). Therefore, a local increase in temperature at the stage portion can be avoided, thereby preventing the material strength from being reduced.
(6) Suppression of a reduction in stage efficiency
   FIG. 3 shows absolute velocity V of steam that flows out from the stationary blade 23' when the overload valve 6 is fully closed; relative velocity W, relative to the rotating blade 22', of the steam that flows out from the stationary blade 23' when the overload valve 6 is fully closed; absolute velocity V' of steam that flows out from the stationary blade 23' when the overload valve 6 is opened; relative velocity W', relative to the rotating blade 22', of the steam that flows out from the stationary blade 23' when the overload valve 6 is opened; the rotating velocity U of the rotating blade 22'; and an angle θ between the relative velocity W' and the inlet portion of the rotating blade.

With reference to FIG. 3, when the overload valve 6 is fully opened, an effective heat drop becomes smaller at a portion between a stage inlet portion into which the steam having passed through the main steam control valve 4 flows and a stage inlet portion into which the steam having passed through the overload valve 6 flows than when the overload valve 6 is fully closed. The velocity of the steam that flows out from the stationary blade 23' is thereby reduced at a higher-pressure stage than a stage into which the steam having passed through the overload valve 6 flows (V > V'). An angle θ between the rotating blade inlet portion and a relative velocity W', relative to the rotating blade 22', of the steam flowing out from the stationary blade 23' is thereby enlarged, increasing a loss in the energy of steam. This phenomenon becomes conspicuous when the drift at the stage portion is large.

In contrast, the present embodiment as described in the item (4) can suppress the drift at the stage portion. Therefore, a loss in the energy of the steam can be reduced, thereby improving the efficiency in power generation.

The above first embodiment describes the case where the slit portion 31 is formed between the diaphragm outer ring 24 and the casing 28. In contract, the slit portion can be formed between two casings. The slit portion can also be formed between the diaphragm outer rings of two adjacent stages. Alternatively, two or more of the configurations of these slit portions can be used in combination.

The first embodiment describes the case where the overload steam pipe 5 is fitted to the casing 28. In contrast, the present invention can also be applied to the case where the overload steam pipe 5 is being welded to the casing 28.

### <Second Embodiment>

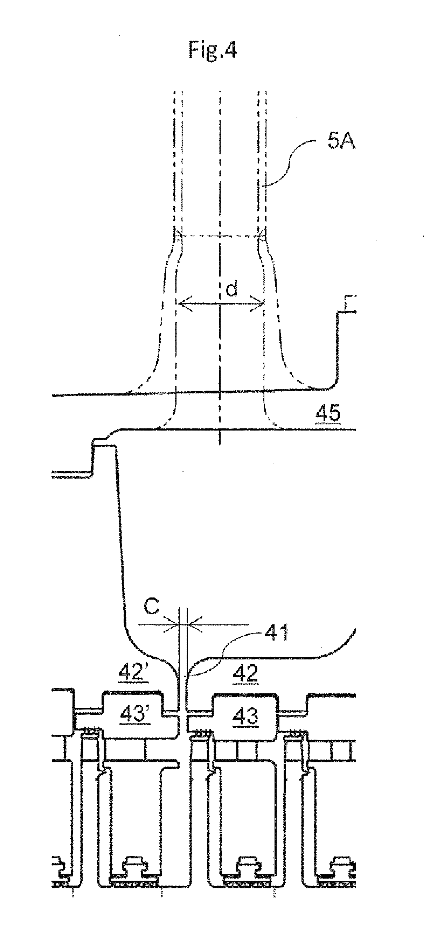

A second embodiment of steam turbine equipment of the present invention will be described with reference to FIG. 4.

FIG. 4 is a cross-sectional view illustrating an example of a configuration of a high pressure turbine according to the second embodiment of the present invention by way of example.

The steam turbine equipment of the present embodiment illustrated in FIG. 4 is different from the steam turbine equipment of the first embodiment in the configuration of a slit portion and a method of connecting an overload steam pipe to a steam turbine.

The slit portion 31 of the first embodiment is composed of the turbine-axial gap between the diaphragm outer ring 24 and the casing 28.

In contrast, a slit portion 41 of the present embodiment as illustrated in FIG. 4 is composed of a turbine-axial gap between a first inner casing 42 and a second inner casing 42' and a turbine-axial gap between a diaphragm outer ring 43 and a diaphragm outer ring 43'.

The overload steam pipe 5 of the first embodiment is fitted to the casing 28, whereas an overload steam pipe 5A of the present embodiment is welded to an outer casing 45.

The second embodiment of the steam turbine equipment of the present invention can achieve almost the same advantages as those of the first embodiment of the steam turbine equipment described above.

### <Others>

The present invention is not limited to the above embodiments and includes various modifications in a range not departing from the gist thereof. For example, the present invention includes not only the steam turbine equipment that has all the configuration described in each one of the above embodiments but also steam turbine equipment with a part of the configuration omitted. Alternatively, a part of the configuration according to a certain one of the embodiments can be added to the configuration according to another embodiment or be replaced with a part of the configuration according to another embodiment.

The above embodiments exemplify the case where the high pressure turbine 7, the intermediate turbine 10, and the low pressure turbine 12 which are coupled with one another drive the generator 16. In contrast, the turbines 7, 10, 12 may individually drive the generators that are respectively connected to the shafts of the turbines 7, 10, 12. A couple of any two of the three turbines 7, 10, 12 may drive a generator. Further, the present invention can be applied to a steam turbine of a combined cycle system.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. Steam turbine equipment, comprising:
a main steam pipe (2) for leading steam generated in a steam generating source to a steam turbine;
a main steam control valve (4) disposed in the main steam pipe (2);
an overload steam pipe (5) that branches from the main steam pipe (2) and bypasses the steam control valve (4) such that the steam generated in the steam generating source is led to a lower-pressure side of the steam turbine than a point where the main steam pipe (2) connects to the steam turbine;
an overload valve (6) disposed in the overload steam pipe (5); and
a slit portion (31) through which the steam that has passed through the overload valve (6) passes before flowing into a steam turbine stage portion,
wherein the slit portion (31) is configured such that its width in an axial direction of a turbine rotor (15) is smaller than an inside diameter of the overload steam pipe (5).

2. The steam turbine equipment according to claim 1, wherein the slit portion (31) is formed between a diaphragm outer ring (24) and a casing (28).

3. The steam turbine equipment according to claim 1, wherein the slit portion (31) is formed between two casings.

4. The steam turbine equipment according to claim 1, wherein the slit portion (31) is formed between diaphragm outer rings (24, 24') of two adjacent stages in an axial direction of the turbine.

5. The steam turbine equipment according to any one of the preceding claims,
wherein the overload steam pipe (5) is fitted to a casing (28).

6. The steam turbine equipment according to any one of claims 1 to 4,
wherein the overload steam pipe (5) is welded to a casing (28).
